# EUROPÄISCHE PATENTSCHRIFT

(11) **EP 3 564 063 B1**
(45) Veröffentlichungstag und Bekanntmachung des Hinweises auf die Patenterteilung: **13.01.2021**
(21) Anmeldenummer: 18170190.5
(22) Anmeldetag: 30.04.2018
(51) Int. Cl.: B60L 53/30, B60L 53/31, B60L 53/60

(54) **LADESTATION AUSGEBILDET ALS INFRASTRUKTURELEMENT**
CHARGING STATION DESIGNED AS INFRASTRUCTURE ELEMENT
STATION DE RECHARGE CONSTRUIT COMME ÉLÉMENT D'INFRASTRUCTURE

(43) Veröffentlichungstag der Anmeldung: 06.11.2019
(73) Patentinhaber: Deutsche Telekom AG, 53113 Bonn (DE)
(72) Erfinder: Pfeuffer, Marco, 64839 Münster (DE)
(74) Vertreter: Nern, Peter-Michael

(56) Entgegenhaltungen:
- EP-A1- 2 610 806
- CN-A- 104 863 178
- CN-A- 105 421 853
- DE-A1-102009 024 721
- DE-A1-102015 113 799
- DE-A1-102016 112 613
- DE-A1-102017 124 469
- NL-C- 1 038 495
- US-A1- 2012 109 403
- US-A1- 2014 067 680
- US-A1- 2016 176 307

## Beschreibung

### TECHNISCHES GEBIET

Die Erfindung betrifft ein Infrastrukturelement für einen Belag eines Verkehrswegs zum Bereitstellen elektrischer Energie für ein elektrisch betriebenes Fahrzeug.

### TECHNISCHER HINTERGRUND

Elektrisch betriebene Fahrzeuge nutzen elektrische Energie. Diese kann in elektrischen Speichern, wie Batterien oder Akkus, mitgeführt werden, um die Mobilität des elektrisch betriebenen Fahrzeugs hoch zu halten. Die Speicher haben ein begrenztes Fassungsvermögen für elektrische Energie und müssen aufgeladen werden, um die Reichweite des elektrisch betriebenen Fahrzeugs hoch zu halten.

Die Speicher können so dimensioniert sein, dass sie für einen Tag reichen und so in einer heimischen Garage aufgeladen werden können. Jedoch kommt es auch vor, dass die Kapazität des Speichers hierfür nicht ausreicht oder eine Strecke gefahren werden soll, deren Länge größer ist, als eine maximale Reichweite einer Speicherladung zulässt.

Hierfür können unterwegs stationäre Ladestationen verwendet werden, die beispielsweise an Tankstellen aufgestellt sind. Auch können Ladesäulen zum Einsatz kommen, die separat an Straßen aufgestellt sind. Derartige Ladesäulen sind jedoch teuer und erfordern zudem städtebauliche Maßnahmen.

Aus der Druckschrift US 2016 / 176307 A1 ist ein System zum Bereitstellen von Informationen über Ladestationen für Elektrofahrzeuge bekannt.

Die Druckschrift DE10 2009 024 721 A1 beschreibt eine Station mit einer Ladebox oder einem Einsteckmodul für einen Stromanschluss, einer Brechungseinheit und einem beweglichen Ladearm.

Die Druckschrift NL 1 038 495 C betrifft einen Ladepunkt für ein elektrisch angetriebenes Fahrzeug.

Die Druckschrift DE 10 2016 112613 A1 beschreibt eine Ladestation für Elektrofahrzeuge und einen Ladeanschluss für eine Ladestation.

Die Druckschrift CN 105 421 853 A betrifft einen Solarparkplatz.

Die Druckschrift CN 104 863 178 A beschreibt eine Ladevorrichtung für Elektroautos, die unter der Erde aufgestellt werden kann.

Die Druckschrift EP 2 610 806 A1 betrifft eine Ladestation zur Bereitstellung elektrischer Energie für elektrisch betreibbare Fahrzeuge.

Die Druckschrift DE 10 2015 113 799 A1 beschreibt eine Ladestation für Elektrofahrzeuge sowie eine Schnittstelleneinrichtung in einer solchen Ladestation.

Die Druckschrift US 2012/109403 A1 beschreibt ein Identifikationsmodul für einen elektrischen Anschluss einer Ladestation.

Die Druckschrift US 2014/067680 A1 betrifft ein Bezahlsystem für eine Ladestation unter Verwendung eines Mobiltelefons eines Nutzers.

### ZUSAMMENFASSUNG DER ERFINDUNG

Vor diesem Hintergrund stellt sich der vorliegenden Erfindung die Aufgabe, ein verbessertes Konzept zum Bereitstellen elektrischer Energie für ein elektrisch betriebenes Fahrzeug aufzuzeigen.

Diese Aufgabe wird durch die Merkmale der unabhängigen Ansprüche gelöst. Vorteilhafte Weiterbildungsformen sind Gegenstand der abhängigen Ansprüche.

Die Aufgabe wird gemäß einem ersten Aspekt durch ein Infrastrukturelement für einen Belag eines Verkehrswegs zum Bereitstellen elektrischer Energie für ein elektrisch betriebenes Fahrzeug gelöst, wobei das Infrastrukturelement eingerichtet ist zur Kommunikation mit einem Mobilfunknetzwerk und einem Server. Der Server ist in dem Mobilfunknetzwerk angeordnet und dazu eingerichtet, eine zweite Teilnehmeridentifikation eines Nutzers zu prüfen und bei einem positiven Prüfungsergebnis ein Freigabesignal an das Infrastrukturelement zu senden. Das Infrastrukturelement hat ein Teilnehmeridentitätsmodul mit einer ersten Teilnehmeridentifikation zur Identifikation des Infrastrukturelements in dem Mobilfunknetzwerk, eine Kommunikationsschnittstelle, die ausgebildet ist, die zweite Teilnehmeridentifikation eines Nutzers zu empfangen, wobei der Nutzer durch die zweite Teilnehmeridentifikation in dem Mobilfunknetzwerk identifizierbar ist und eine Mobilfunkschnittstelle, die ausgebildet ist, die empfangene zweite Teilnehmeridentifikation des Nutzers an den Server über das Mobilfunknetzwerk zu übertragen, und von dem Server das Freigabesignal zu empfangen. Das Infrastrukturelement weist des Weiteren einen ersten elektrischen Anschluss auf, welcher elektrisch mit einem Energieversorgungsnetzwerk verbindbar ist, um das Infrastrukturelement mit elektrischer Energie zu versorgen und einen zweiten elektrischen Anschluss auf, der dazu ausgebildet ist, elektrische Energie für das elektrisch betriebene Fahrzeug bereitzustellen. Das Infrastrukturelement hat ein Schaltelement, das ausgebildet ist, ansprechend auf den Empfang des Freigabesignals den ersten elektrischen Anschluss mit dem zweiten elektrischen Anschluss elektrisch zu verbinden. Die Kommunikationsschnittstelle ist ausgebildet, die zweite Teilnehmeridentifikation des Nutzers von einem Mobiltelefon mittels einer Nahfeldkommunikation abzufragen, wenn erkannt wird, dass ein Stecker in den zweiten elektrischen Anschluss eingesteckt ist. Das Schaltelement ist ausgebildet, den ersten elektrischen Anschluss von dem zweiten elektrischen Anschluss elektrisch zu trennen, wenn von dem Server ein Stoppsignal über die Mobilfunkschnittstelle empfangen wurde.

Das Infrastrukturelement kann in einer Fahrbahn, einem Rand einer Fahrbahn oder einem anderen Straßenteil angeordnet sein. Das Infrastrukturelement kann hierbei einen Belag der Straße darstellen. Der Verkehrsweg kann eine Straße, eine Fahrbahn oder ein Fußweg sein.

Das Mobilfunknetzwerk kann ein LTE, ein 5G oder ein anderes Mobilfunknetzwerk sein. Das Mobilfunknetzwerk kann Netzwerkentitäten umfassen, die von einem Mobilfunknetzwerkbetreiber betrieben werden. Der Server kann in so einer Netzwerkentität integriert sein oder so eine Netzwerkentität umfassen. Die Netzwerkentität kann eine in dem Mobilfunknetzwerk betriebene Entität sein, beispielsweise eine Mobility Mangement Entity, MME, oder ein Serving Gateway, SGW.

Das Infrastrukturelement weist ein Teilnehmeridentitätsmodul mit der ersten Teilnehmeridentifikation, engl. subscriber identity module, d.h. eine SIM oder eine elektronische SIM, eSIM, auf. Die erste Teilnehmeridentifikation kann eine Mobilfunkteilnehmeridentifikation sein und eine International Mobile Subscriber Identity, kurz IMSI, oder eine elektronische Identität, eID, umfassen. Durch das Teilnehmeridentitätsmodul mit der ersten Teilnehmeridentifikation ist das Infrastrukturelement in dem Mobilfunknetzwerk identifizierbar und kann so von einer anderen Netzwerkentität erkannt und angesprochen werden.

Die Kommunikationsschnittstelle kann eine zweite Teilnehmeridentifikation eines Nutzers empfangen. Beispielsweise kann die Kommunikationsschnittstelle die zweite Teilnehmeridentifikation des Nutzers über das Mobilfunknetzwerk oder durch eine andere Übertragung erfassen. Die zweite Teilnehmeridentifikation des Nutzers kann eine Mobilfunk-Teilnehmeridentifikation sein und eine International Mobile Subscriber Identity, kurz IMSI, oder eine elektronische Identität, eID, umfassen.

Über die Mobilfunkschnittstelle kann das Infrastrukturelement die zweite Teilnehmeridentifikation des Nutzers zusammen mit der eigenen Teilnehmeridentität des Teilnehmeridentitätsmoduls übertragen. Die Übertragung kann hierbei in das Mobilfunknetzwerk erfolgen und so die Teilnehmeridentität des Nutzers und des Infrastrukturelements dem Server bereitgestellt werden.

Das Infrastrukturelement weist einen ersten elektrischen Anschluss auf. Der erste elektrische Anschluss kann mit einem Energieversorgungsnetzwerk eines Energieanbieters verbunden sein, insbesondere mit einem öffentlichen Stromnetz. über den ersten elektrischen Anschluss kann das Infrastrukturelement mit elektrischer Energie versorgt werden.

Das Infrastrukturelement weist einen zweiten elektrischen Anschluss auf, insbesondere eine Anschlussbuchse, die zum Aufnehmen eines Steckers dient. Über den zweiten elektrischen Anschluss ist ein elektrisch betriebenes Fahrzeug elektrisch anschließbar. Hierbei können auch Steuerungssignale über den zweiten elektrischen Anschluss übertragen werden.

Das Schaltelement des Infrastrukturelements kann mechanisch oder elektronisch ausgestaltet sein. Das Schaltelement kann beispielsweise einen Aktuator, insbesondere ein Relais, umfassen. Das Schaltelement kann durch Verbinden oder Trennen einer elektrischen Verbindung zwischen dem ersten elektrischen Anschluss und dem zweiten elektrischen Anschluss den zweiten elektrischen Anschluss mit der elektrischen Versorgung auf der Seite des ersten elektrischen Anschlusses elektrisch koppeln bzw. trennen.

Der Server kann durch das Bereitstellen des Freigabesignals steuern, wann elektrische Energie an dem zweiten elektrischen Anschluss anliegt.

Der Nutzer kann den Stecker zum Laden seines Fahrzeugs mit dem zweiten elektrischen Anschluss elektrisch verbinden. Dies kann von dem Infrastrukturelement erfasst werden und eine automatische Suche nach einer passenden Kommunikationsverbindung kann über die Kommunikationsschnittstelle gestartet werden. Die Nahfeldkommunikation kann hierbei NFC aber auch weitere Funkstandards umfassen, wie Bluetooth.

Der Server kann ein Stoppsignal bereitstellen und über das Mobilfunknetzwerk an die Mobilfunkschnittstelle des Infrastrukturelements übertragen. Das Stoppsignal kann eine Anweisung zum Beenden der Bereitstellung der elektrischen Energie umfassen. Hierzu kann das Stoppsignal das Schaltelement anweisen, die elektrische Verbindung zwischen dem ersten elektrischen Anschluss und dem zweiten elektrischen Anschluss zu trennen.

Ein Vorteil eines solchen Infrastrukturelements ist es, dass eine Ladestation bereitgestellt werden kann, die keinen zusätzlichen Platz an einer Straße einnimmt. Des Weiteren kann effizient und ergonomisch elektrische Energie für ein elektrisch betriebenes Fahrzeug bereitgestellt werden.

In einer Ausgestaltung ist das Infrastrukturelement ein Bordstein oder ein Pflasterstein.

Das Infrastrukturelement kann hierbei in einen Bordstein bzw. Pflasterstein eingebaut sein. Es kann lediglich der zweite elektrische Anschluss oder das gesamte Infrastrukturelement in dem Bordstein bzw. Pflasterstein angeordnet sein. Das Infrastrukturelement kann ein Gehäuse aus einem Kunststoff, aus Beton, aus Naturstein oder einer Kombination hieraus aufweisen.

Bordsteine und Pflastersteine werden im Straßenbau häufig eingesetzt. Daher kann das Infrastrukturelement als Bordstein und Pflasterstein unauffällig und ohne Raumverlust für die Straßenumgebung an der Straße angeordnet werden.

In einer Ausgestaltung umfasst die Kommunikationsschnittstelle eine der folgenden Schnittstellen: NFC, Bluetooth, WLAN, 5G, LTE.

Die zweite Teilnehmeridentifikation des Nutzers kann von dem Infrastrukturelement beispielsweise über eine Nahfeldkommunikation, engl. near field communication, kurz NFC, über Bluetooth, eine weitere drahtlose Netzwerkverbindung wie WLAN oder aber auch über ein Mobilfunknetzwerk, wie 5G oder LTE, empfangen werden. Die Kommunikationsschnittstelle ist entsprechend hierfür ausgebildet.

In einer Ausgestaltung umfasst die Mobilfunkschnittstelle eine 5G Schnittstelle oder eine LTE Schnittstelle.

Mit einer derartigen Mobilfunkschnittstelle kann in das entsprechende Mobilfunknetzwerk kommuniziert werden. Diese Mobilfunknetzwerke können hohe Übertragungsraten bereitstellen.

In einer Ausgestaltung ist die Mobilfunkschnittstelle ausgebildet, die Identifikation des Teilnehmeridentitätsmoduls an den Server zu senden, um das Infrastrukturelement gegenüber dem Server zu identifizieren.

Das Senden, d.h. das Übertragen der Identifikation des Teilnehmeridentitätsmoduls kann zusammen mit dem Übertragen der zweite Teilnehmeridentifikation des Nutzers erfolgen. Dies kann ebenso zusammen mit einer Berechtigungsanfrage an den Server übertragen werden. Durch das Übertragen der Identifikation des Teilnehmeridentitätsmoduls ist der Standort des Infrastrukturelements dem Server bekannt, das die Identifikation des Teilnehmeridentitätsmoduls jedem Infrastrukturelement eindeutig zuordenbar ist. Die Berechtigungsanfrage kann dazu dienen, den Server die übertragenen Identifikationen, insbesondere die zweite Teilnehmeridentifikation des Nutzers zu überprüfen.

In einer Ausgestaltung umfasst das Teilnehmeridentitätsmodul eine SIM oder eine eSIM. Hierdurch kann das Infrastrukturelement selbständig über die Mobilfunkschnittstelle in dem Mobilfunknetzwerk kommunizieren und ist direkt ansprechbar.

In einer Ausgestaltung ist die zweite Teilnehmeridentifikation des Nutzers eine IMSI oder eID oder eSIM. Die zweite Teilnehmeridentifikation des Nutzers kann mit einem Endgerät des Nutzers verknüpft sein. Hierdurch ist der Nutzer mit dem Endgerät verknüpft, das in dem Mobilfunknetzwerk registriert ist. Dies lässt eine eindeutige Zuordnung der zweiten Teilnehmeridentifikation des Nutzers zu, um beispielsweise eine Rechnung für den Energiekonsum an dem Infrastrukturelement auszustellen.

In einer Ausgestaltung ist der zweite elektrische Anschluss ausgebildet, einen Stecker gemäß EN 62196 Typ 2 aufzunehmen. Hierbei handelt es sich um einen Standard für Stecker, die zum Laden von Energiespeichern elektrisch betriebener Fahrzeuge dienen.

In einer Ausgestaltung weist das Infrastrukturelement eine Anzeigeeinrichtung auf, die dazu eingerichtet ist, ein Statussignal auszugeben, um einen Status des Infrastrukturelements anzuzeigen.

Bei der Anzeigeeinrichtung kann es sich um eine LED Anzeige handeln, um Lichtsignale auszugeben. Das Statussignal kann somit durch Aufleuchten einer optischen Anzeige, wie einer LED, dargestellt werden. Die Anzeigeeinrichtung kann auch eine akustische Anzeige umfassen, beispielsweise um eine erfolgreich hergestellte elektrische Verbindung zwischen dem zweiten elektrischen Anschluss und einem Stecker anzuzeigen.

In einer Ausgestaltung ist die Anzeigeeinrichtung ausgestaltet, das Statussignal auszugeben, wenn das Schaltelement den ersten elektrischen Anschluss von dem zweiten elektrischen Anschluss elektrisch verbindet.

Somit kann angezeigt werden, dass eine elektrische Verbindung zwischen den beiden elektrischen Anschlüssen besteht und elektrische Energie ausgegeben wird, bzw. werden kann. Beispielsweise wird dies durch eine dauerhaft leuchtende LED in grüner Farbe angezeigt.

In einer Ausgestaltung ist die Anzeigeeinrichtung ausgestaltet, das Statussignal auszugeben, wenn das Schaltelement den ersten elektrischen Anschluss und den zweiten elektrischen Anschluss elektrisch trennt.

Somit kann angezeigt werden, dass eine elektrische Verbindung zwischen den beiden elektrischen Anschlüssen getrennt ist und keine elektrische Energie ausgegeben werden kann. Beispielsweise wird dies durch eine dauerhaft leuchtende oder blinkende LED in roter Farbe angezeigt.

Ebenso kann das Statussignal weitere Zustände des Infrastrukturelements umfassen, wie beispielsweise einen unerwartet gezogenen Stecker, ein Erreichen eines vorbestimmten Betrags einer Rechnung für die bereitgestellte Energie oder weitere Zustände, die das Infrastrukturelement betreffen oder eine Lieferbedingung für die elektrische Energie.

Gemäß einem zweiten Aspekt wird die Aufgabe durch ein Kommunikationssystem mit einem Server und einem Infrastrukturelement für einen Belag eines Verkehrswegs in einem Kommunikationsszenario mit einem Mobilfunknetzwerk und dem Server gelöst. Der Server ist in dem Mobilfunknetzwerk angeordnet und dazu eingerichtet ist, eine zweite Teilnehmeridentifikation eines Nutzers zu prüfen und bei einem positiven Prüfungsergebnis ein Freigabesignal an das Infrastrukturelement zu senden. Das Infrastrukturelement umfasst ein Teilnehmeridentitätsmodul mit einer ersten Teilnehmeridentifikation zur Identifikation des Infrastrukturelements in dem Mobilfunknetzwerk, eine Kommunikationsschnittstelle, die ausgebildet ist, eine zweite Teilnehmeridentifikation eines Nutzers zu empfangen, wobei der Nutzer durch die zweite Teilnehmeridentifikation in dem Mobilfunknetzwerk identifizierbar ist, eine Mobilfunkschnittstelle, die ausgebildet ist, mit dem Server über das Mobilfunknetzwerk zu kommunizieren und die empfangene zweite Teilnehmeridentifikation des Nutzers an den Server zu übertragen. Das Infrastrukturelement umfasst weiter einen ersten elektrischen Anschluss, welcher elektrisch mit einem Energieversorgungsnetzwerk verbindbar ist, um das Infrastrukturelement mit elektrischer Energie zu versorgen, einen zweiten elektrischen Anschluss, der dazu ausgebildet ist, das Infrastrukturelement elektrisch mit dem elektrisch betriebenen Fahrzeug zu verbinden und ein Schaltelement, das ausgebildet ist, ansprechend auf den Empfang des Freigabesignals den ersten elektrischen Anschluss mit dem zweiten elektrischen Anschluss elektrisch zu verbinden, wobei die Kommunikationsschnittstelle ausgebildet ist, die zweite Teilnehmeridentifikation des Nutzers von einem Mobiltelefon mittels einer Nahfeldkommunikation abzufragen, wenn erkannt wird, dass ein Stecker in den zweiten elektrischen Anschluss eingesteckt ist, und wobei das Schaltelement ausgebildet ist, den ersten elektrischen Anschluss von dem zweiten elektrischen Anschluss elektrisch zu trennen, wenn von dem Server ein Stoppsignal über die Mobilfunkschnittstelle empfangen wurde.

Das Kommunikationssystem kann einen Server und ein Infrastrukturelement der oben beschriebenen Art umfassen. Es kann ein Mobilfunknetzwerk umfassen, das eine Basisstation aufweist, über die das Infrastrukturelement Daten an den Server und der Server Daten an das Infrastrukturelement übertragen kann. Die Daten können hierbei die zweite Teilnehmeridentifikation des Nutzers und/oder erste Teilnehmeridentifikation des Teilnehmeridentitätsmoduls des Infrastrukturelements bzw. das Freigabesignal oder das Stoppsignal umfassen.

Gemäß einem dritten Aspekt der Erfindung wird die Aufgabe durch ein Verfahren zur Kommunikation zwischen einem Infrastrukturelement für einen Belag eines Verkehrswegs und einem in einem Mobilfunknetzwerk angeordneten Server gelöst. Das Infrastrukturelement weist ein Teilnehmeridentitätsmodul mit einer ersten Teilnehmeridentifikation zur Identifikation des Infrastrukturelements in dem Mobilfunknetzwerk, eine Kommunikationsschnittstelle und eine Mobilfunkschnittstelle, die ausgebildet ist, mit dem Server über das Mobilfunknetzwerk zu kommunizieren auf. Das Infrastrukturelement weist weiter einen ersten elektrischen Anschluss auf, welcher elektrisch mit einem Energieversorgungsnetzwerk verbindbar ist, um das Infrastrukturelement mit elektrischer Energie zu versorgen und einen zweiten elektrischen Anschluss auf, der dazu ausgebildet ist, das Infrastrukturelement elektrisch mit dem elektrisch betriebenen Fahrzeug zu verbinden. Das Infrastrukturelement weist ein Schaltelement auf, das ausgebildet ist, den ersten elektrischen Anschluss mit dem zweiten elektrischen Anschluss elektrisch zu verbinden. Das Verfahren umfasst:
Empfangen einer zweiten Teilnehmeridentifikation eines Nutzers durch die Kommunikationsschnittstelle des Infrastrukturelements, wobei der Nutzer durch die zweite Teilnehmeridentifikation in dem Mobilfunknetzwerk identifizierbar ist;
Übertragen der empfangenen zweiten Teilnehmeridentifikation des Nutzers an den Server durch die Mobilfunkschnittstelle des Infrastrukturelements;
Prüfen der zweiten Teilnehmeridentifikation des Nutzers durch den Server;
Übertragen eines Freigabesignals an das Infrastrukturelement durch den Server, wenn die Prüfung der zweiten Teilnehmeridentifikation des Nutzers positiv war; und
elektrisches Verbinden des ersten elektrischen Anschlusses mit dem zweiten elektrischen Anschluss durch das Schaltelement, wenn das Freigabesignal des Servers über die Mobilfunkschnittstelle empfangen wurde,
elektrisches Trennen des ersten elektrischen Anschlusses von dem zweiten elektrischen Anschluss durch das Schaltelement, wenn von dem Server ein Stoppsignal über die Mobilfunkschnittstelle empfangen wurde;
wobei das Empfangen der zweiten Teilnehmeridentifikation basierend auf einem Abfragen der zweiten Teilnehmeridentifikation des Nutzers von einem Mobiltelefon mittels einer Nahfeldkommunikation, wenn erkannt wird, dass ein Stecker in den zweiten elektrischen Anschluss eingesteckt ist, erfolgt.

Bei der Prüfung kann die zweite Teilnehmeridentifikation des Nutzers überprüft werden. Insbesondere kann überprüft werden, ob die zweite Teilnehmeridentifikation des Nutzers valide ist und/oder ob ein zu der zweiten Teilnehmeridentifikation hinterlegter Nutzer berechtigt ist, elektrische Energie über das Infrastrukturelement zu beziehen.

Mit einem derartigen Verfahren kann ein Kommunikationsszenario betrieben werden, das die Bereitstellung elektrischer Energie für ein elektrisch betriebenes Fahrzeug ermöglicht.

### KURZE BESCHREIBUNG DER FIGUREN

Weitere Ausführungsbeispiele werden Bezug nehmend auf die beiliegenden Zeichnungen erläutert. Es zeigen:
Fig. 1a eine schematische Darstellung eines Teils einer Straße mit einem Infrastrukturelement gemäß einer Ausgestaltung der Erfindung;
Fig. 1b eine schematische Darstellung einer Straße mit einem Infrastrukturelement gemäß einer weiteren Ausgestaltung der Erfindung;
Fig. 2 eine schematische Darstellung eines Infrastrukturelements gemäß einer Ausgestaltung der Erfindung;
   gemäß einer Ausgestaltung der Erfindung
Fig. 3 eine schematische Darstellung eines Kommunikationssystems gemäß einer Ausgestaltung der Erfindung;
Fig. 4 ein Ablaufdiagramm eines Verfahrens gemäß einer Ausgestaltung der Erfindung.

### DETAILIERTE BESCHREIBUNG

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

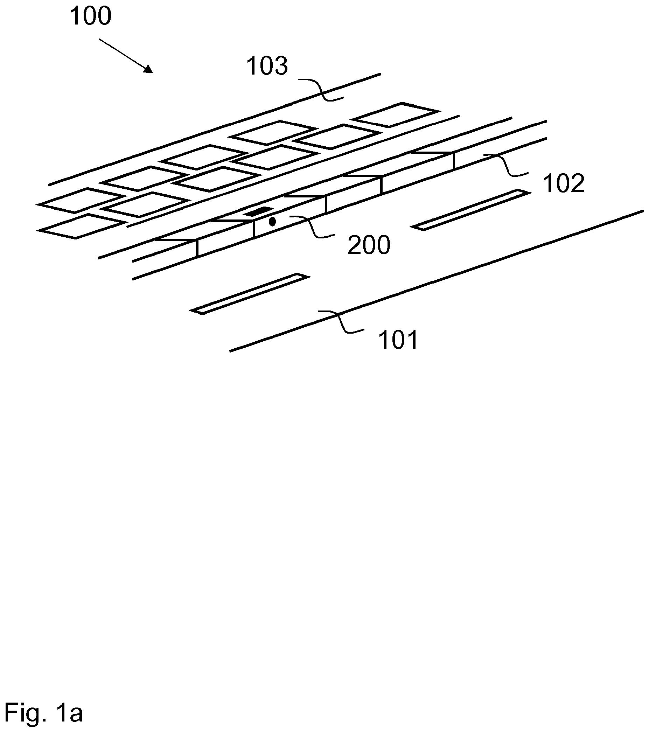

Fig. 1a zeigt eine schematische Darstellung einer Straße 100 mit einem Infrastrukturelement 200 gemäß einem Ausführungsbeispiel.

Die Straße 100 weist eine Fahrbahn 101 und einen Bordstein 102 auf, der die Fahrbahn 101 von einem an den Bordstein 102 angrenzenden Fußweg 103 abgrenzt.

Auf der Fahrbahn 101 können Fahrzeuge fahren, insbesondere elektrisch betriebene Fahrzeuge, wie Elektrofahrzeuge oder Hybridfahrzeuge. Derartige Fahrzeuge weisen einen Speicher zum Speichern elektrischer Energie auf, der sich beim Fahren entleert. Der Speicher muss daher von Zeit zu Zeit aufgeladen werden.

Das Infrastrukturelement 200 ist ein Bordstein 102. Das Infrastrukturelement 200 ist in die Straße eingelassen und so angeordnet, dass es die seiner Art nach typischen Eigenschaften erfüllen kann, wie beispielsweise ein benachbarter gewöhnlicher Bordstein.

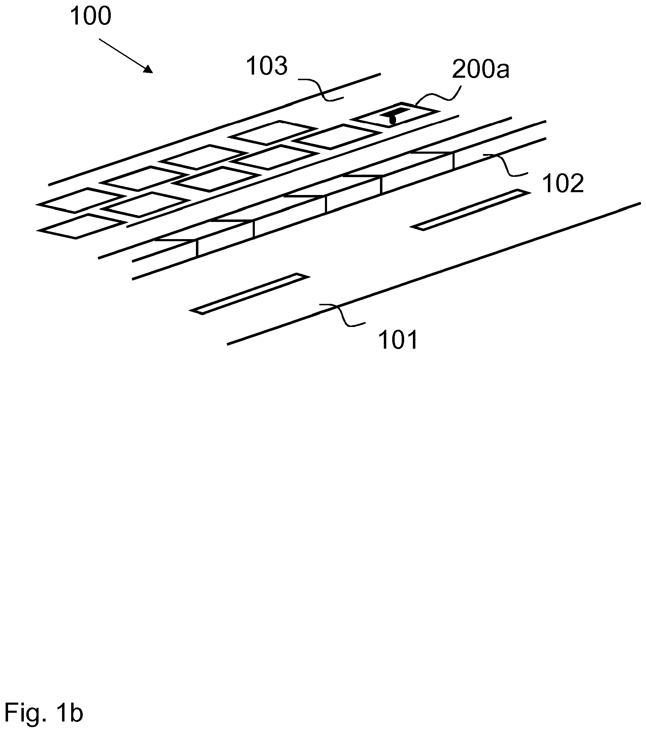

Fig. 1b zeigt eine schematische Darstellung der Straße 100 mit einem Infrastrukturelement 200a gemäß einem weiteren Ausführungsbeispiel. Das Infrastrukturelement 200a ist ein Pflasterstein 103. Das Infrastrukturelement 200 ist in den Fußweg 103 eingelassen und so angeordnet, dass es die seiner Art nach typischen Eigenschaften erfüllen kann, wie beispielsweise ein benachbarter gewöhnlicher Bordstein.

Im Folgenden wird das Infrastrukturelement 200 näher beschrieben, das einen Bordstein darstellt. Es versteht sich, dass die gleichen Merkmale ebenso in das Infrastrukturelement 200a integriert sein können, das einen Pflasterstein darstellt. Die folgende Beschreibung bezieht sich daher auf unterschiedliche Ausführungsformen von Infrastrukturelementen, insbesondere auf einen Bordstein und einen Pflasterstein. Lediglich aus Gründen der Übersichtlichkeit, wurde auf eine explizite Beschreibung des Infrastrukturelements 200a verzichtet.

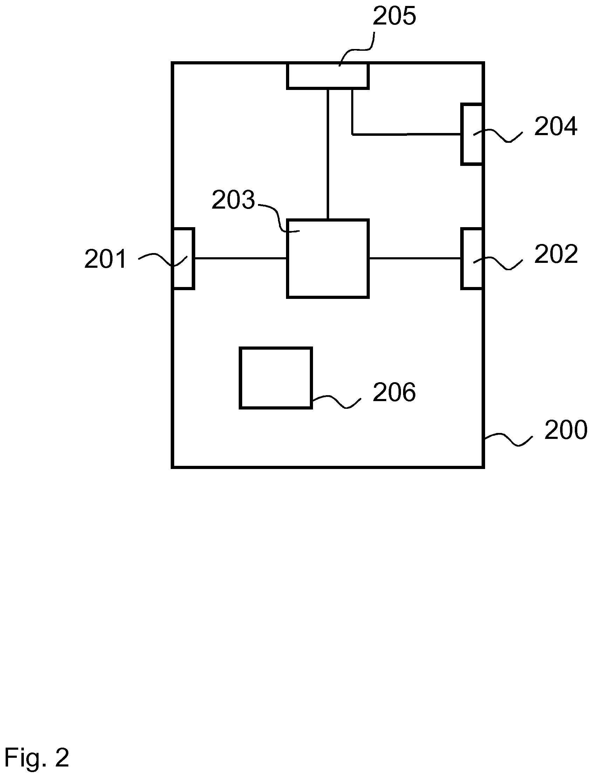

Fig. 2 zeigt eine schematische Darstellung des Infrastrukturelements 200 gemäß einem Ausführungsbeispiel. Das Infrastrukturelement 200 kann als Bordstein verwendet werden und so wie ein gewöhnlicher Bordstein eine Fahrbahnbegrenzung darstellen.

Das Infrastrukturelement 200 ist aus Kunststoff gefertigt. In weiteren Ausführungsbeispielen ist das Infrastrukturelement 200 aus Beton, Naturstein oder einem anderen Material oder Materialverbund gefertigt, das sich als Bordstein eignet. Gleiches gilt für das Infrastrukturelement 200a, das einen Pflasterstein darstellt entsprechend.

Das Infrastrukturelement 200 weist einen ersten elektrischen Anschluss 201 auf. Der erste elektrische Anschluss 201 dient als Verbindung des Infrastrukturelements 200 mit einem elektrischen Energieversorgungsnetzwerk (nicht dargestellt). Somit kann das Infrastrukturelement 200 mit elektrischer Energie versorgt werden.

Das Infrastrukturelement 200 weist einen zweiten elektrischen Anschluss 202 auf. Der zweite elektrische Anschluss 202 dient dazu ein elektrisch betriebenes Fahrzeug an das Infrastrukturelement 200 anzuschließen. Hierfür weist der zweite elektrische Anschluss 202 eine Buchse für einen Stecker auf, der der Norm EN 62196 Typ2 genügt. In einem weiteren Ausführungsbeispiel genügt der zweite Anschluss 202 einer anderen oder mehreren Normen zum Anschließen von elektrischen Leitungen zum Laden eines elektrisch betriebenen Fahrzeugs.

Das Infrastrukturelement 200 weist ein Schaltelement 203 auf. Das Schaltelement 203 ist elektrisch sowohl mit dem ersten elektrischen Anschluss 201, als auch mit dem zweiten elektrischen Anschluss 202 verbunden und dient dazu, eine elektrische Verbindung zwischen dem ersten elektrischen Anschluss 201 und dem zweiten elektrischen Anschluss 202 zu schalten, d.h. herzustellen bzw. zu unterbrechen. Das Schaltelement 203 ist ein Relais, das als Aktuator geschaltet werden kann und so die elektrische Verbindung zwischen den beiden elektrischen Anschlüssen 201, 202 herstellen bzw. unterbrechen kann.

Das Infrastrukturelement 200 weist eine Kommunikationsschnittstelle 204 auf. Die Kommunikationsschnittstelle 204 ist eine Nahfeldkommunikationsschnittstelle und dient dazu, eine Nahfeldkommunikation zwischen dem Infrastrukturelement 200 und einem mobilen Endgerät eines Nutzers herzustellen, insbesondere über NFC. In weiteren Ausführungsbeispielen ist die Kommunikationsschnittstelle 204 eine Bluetoothschnittstelle oder eine Mobilfunkschnittstelle für LTE oder 5G oder eine Kombination der genannten oder weiteren Schnittstellenarten. Das Infrastrukturelement 200 weist ein Teilnehmeridentitätsmodul mit einer ersten Teilnehmeridentifikation zur Identifikation des Infrastrukturelements (200, 200a) in dem Mobilfunknetzwerk auf.

Die Kommunikationsschnittstelle 204 ist dazu eingerichtet, eine zweite Teilnehmeridentifikation des Nutzers zu empfangen, insbesondere eine IMSI oder eine eID eines Mobiltelefons zu empfangen.

Das Infrastrukturelement 200 weist eine Mobilfunkschnittstelle 205 auf. Die Mobilfunkschnittstelle 205 ist ein Funkmodul zum Übertragen und Empfangen von Daten in bzw. aus einem Mobilfunknetzwerk, insbesondere einem 5G oder einem LTE Mobilfunknetzwerk.

Hierfür ist die Mobilfunkschnittstelle 205 dazu eingerichtet, über eine Basisstation mit einem Server, insbesondere einer Netzwerkentität des Mobilfunknetzwerkes, zu kommunizieren.

Das Infrastrukturelement 200 weist hierfür ein Teilnehmeridentitätsmodul mit einer ersten Teilnehmeridentifikation zur Identifikation des Infrastrukturelements 200 in dem Mobilfunknetzwerk auf (nicht dargestellt). Bei der Kommunikation über das Mobilfunknetzwerk verwendet das Infrastrukturelement 200 die erste Teilnehmeridentifikation um sich gegenüber der Basisstation und weiteren Mobilfunknetzwerkteilnehmern zu identifizieren. So kann auch die Position des Infrastrukturelements 200 weiteren Teilnehmern, wie dem Server, bekanntgemacht werden.

Das Infrastrukturelement 200 weist weiter eine Anzeigeeinrichtung 206 auf. Die Anzeigeeinrichtung 206 ist eine optische Anzeige und umfasst mehrere Licht emittierende Dioden, LEDs. In einem weiteren Ausführungsbeispiel umfasst die Anzeigeeinrichtung 206 ein eine Anzeige zum Anzeigen von Texten, Bilder und/oder eine akustische Anzeige zum Ausgeben von Tonsignalen.

Über die Anzeigeeinrichtung 206 können Statussignale des Infrastrukturelements 200 ausgegeben werden. Eine grüne LED kann einen Fluss elektrischer Energie von dem Infrastrukturelement 200 zu einem an dem zweiten elektrischen Anschluss 202 angeschlossenen Verbraucher anzeigen, insbesondere ein Laden des elektrisch betriebenen Fahrzeugs anzeigen. Eine rote LED kann einen Fehler oder ein Ende der Bereitstellung elektrischer Energie anzeigen. In weiteren Ausführungsbeispielen können die Anzeigen variieren und andere Farben zusätzlich oder alternativ umfassen. Ebenso können weitere Status des Infrastrukturelements 200 angezeigt werden.

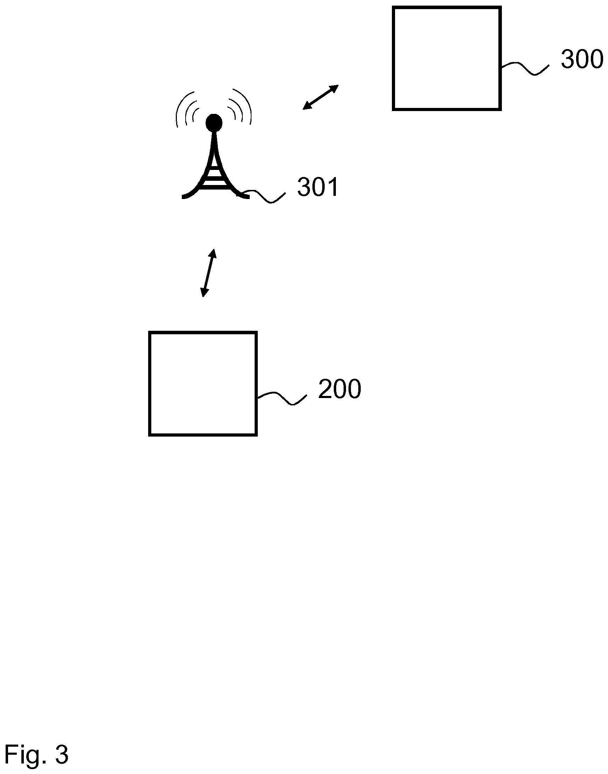

Fig. 3 zeigt eine schematische Darstellung einer Anordnung mit dem Infrastrukturelement 200, einem Server 300 und einer Basisstation 301.

Der Server 300 ist in dem Mobilfunknetzwerk angeordnet und ist über eine Funkverbindung über das Mobilfunknetzwerk ansprechbar.

Das Infrastrukturelement 200 kann über die Mobilfunkschnittstelle 205 eine Verbindung über die Basisstation 301 zu dem Mobilfunknetzwerk herstellen und so mit dem Server 300 kommunizieren. Umgekehrt kann der Server 300 anhand der Identifikation des Teilnehmeridentitätsmoduls des Infrastrukturelements 200 das Infrastrukturelement 200 kontaktieren. In beide Kommunikationsrichtungen kann eine Mobilfunkverbindung zwischen dem Server 300 und dem Infrastrukturelement 200 aufgebaut werden.

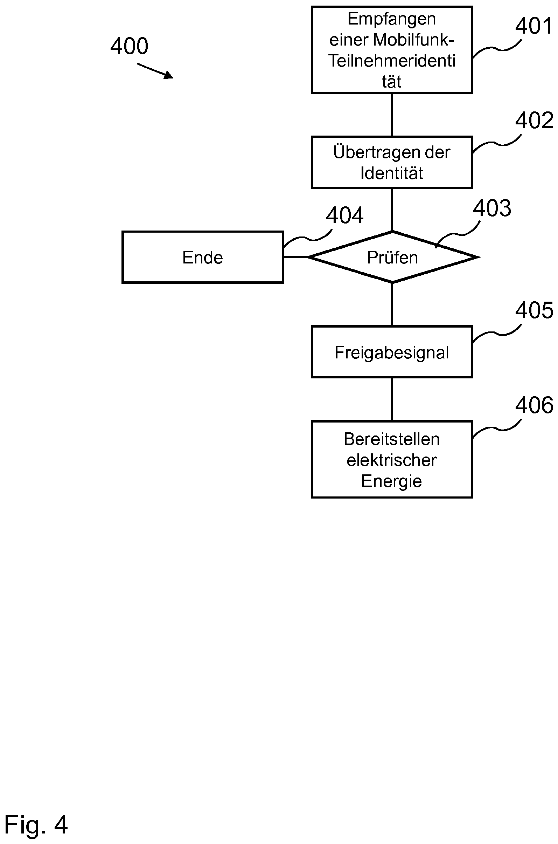

Fig. 4 zeigt ein Flussdiagramm für ein Verfahren gemäß einer Ausgestaltung der Erfindung.

In einem Schritt 401 wird von der Kommunikationsschnittstelle 204 des Infrastrukturelements 200 eine zweite Teilnehmeridentifikation eines Nutzers empfangen.

Hierfür detektiert der zweite elektrische Anschluss 202 eine Aktivierung des Infrastrukturelements 200, insbesondere das Einstecken eines Steckers in den zweiten elektrischen Anschluss 202. Dies kann über ein Näherungssignal, engl. proximity detector signal, kurz: PP signal, erkannt werden, beispielsweise bei einem EN 62196 typ Stecker. Das Infrastrukturelement 200 aktiviert dann die Kommunikationsschnittstelle 204, die automatisch nach Geräten in Funkreichweite sucht. Erkennt die Kommunikationsschnittstelle 204 ein Gerät, insbesondere ein mobiles Endgerät wie ein Smartphone, so verbindet sich die Kommunikationsschnittstelle 204 mit dem Gerät und empfängt von dem Gerät die zweite Teilnehmeridentifikation des Geräts und somit des Nutzers. Für die Verbindung ist eine Bestätigung eines Nutzers des Gerätes nötig. In einem weiteren Ausführungsbeispiel kann die Bestätigung entfallen.

In einem weiteren Ausführungsbeispiel wird die Kommunikationsschnittstelle 204 von dem Gerät kontaktiert, beispielsweise durch anwählen der Identifikation des Infrastrukturelements 200, insbesondere einer mit einer SIM-Karte verknüpften Telefonnummer. Die Übertragung der zweiten Teilnehmeridentifikation des Nutzers wird hierbei von dem Gerät des Nutzers initiiert.

Das Übertragen der zweiten Teilnehmeridentifikation des Nutzers, bzw. das einstecken des Steckers in den zweiten elektrischen Anschluss 202 signalisiert dem Infrastrukturelement 200, dass ein Nutzer eine Bereitstellung elektrischer Energie zum Laden eines elektrisch betriebenen Fahrzeugs verlangt.

In einem weiteren Ausführungsbeispiel kann über eine geographische Ortsposition des Geräts des Nutzers ein Infrastrukturelement 200 in der Nähe aktiviert werden.

In einem Schritt 402, wird die in Schritt 401 empfangene zweite Teilnehmeridentifikation des Nutzers zusammen mit der ersten Teilnehmeridentifikation des Infrastrukturelements 200 über die Mobilfunkschnittstelle 205 an den Server 300 gesendet. Hierdurch ist zum einen der Nutzer von dem Server 300 identifizierbar, da dieser sich mit der zweiten Teilnehmeridentifikation des Nutzers registriert hat. Die Registrierung geht einer Nutzung des Infrastrukturelements 200 voraus und kann mit dem Mobilfunkanbieter, der das Mobilfunknetzwerk bereitstellt und/oder dem Stromanbieter, der die elektrische Versorgung an dem ersten elektrischen Anschluss 201 bereitstellt vorgenommen werden.

In einem Schritt 403 prüft der Server 300 die empfangenen Daten. Das heißt, der Server 300 prüft, ob der Nutzer, der zu der übertragenen zweite Teilnehmeridentifikation hinterlegt ist, berechtigt ist, an dem Infrastrukturelement 200, das durch die übertragene erste Teilnehmeridentifikation des Infrastrukturelements 200 und dessen Teilnehmeridentifikationsmoduls eindeutig identifiziert ist, bereitgestellte Energie zu empfangen. Der Server 300 vergleicht hierzu die zweite Teilnehmeridentifikation des Nutzers mit hinterlegten zweiten Teilnehmeridentifikation, die gegebenenfalls zu dem Infrastrukturelement 200 zugeordnet sind.

Der Server 300 prüft in einem weiteren Ausführungsbeispiel zusätzlich Netzwerkressourcen, wie einen home subscriber server, HSS, oder eine mobility management entity, MME, um eine Position des Infrastrukturelements 200 zu überprüfen. Hierbei kann verifiziert werden, welcher Netzwerkentität das Infrastrukturelement 200 zugeordnet ist und ob dies mit einer übertragenen bzw. hinterlegten Position konsistent ist. Die Netzwerkentität kann eine in dem Mobilfunknetzwerk betriebene Entität sein, beispielsweise eine Mobility Mangement Entity, MME, oder ein Serving Gateway, SGW.

Ist das Ergebnis der Prüfung negativ, d.h. ist der Nutzer, der zu der übertragenen zweiten Teilnehmeridentifikation hinterlegt ist, nicht berechtigt, das Infrastrukturelement 200 zu nutzen, so sendet der Server 300 ein Bestätigungssignal, das den Empfang der Übertragung bestätigt. In einem weiteren Ausführungsbeispiel wird zusätzlich ein Fehlersignal gesendet um zu signalisieren, dass keine Berechtigung vorliegt und/oder ein Stoppsignal gesendet um zu signalisieren, dass eine ggf. bereits begonnenen Übertragung elektrischer Energie gestoppt werden soll. Das Verfahren endet in Schritt 404. In einem weiteren Ausführungsbeispiel wird keine Nachricht von dem Server 300 an das Infrastrukturelement 200 gesendet, wenn das Ergebnis der Prüfung negativ ist.

Ist das Ergebnis der Prüfung jedoch positiv, so ist der Nutzer berechtigt, elektrische Energie zu empfangen. Der Server 300 übermittelt in Schritt 405 ein Freigabesignal an das Infrastrukturelement 200, um zu signalisieren, dass der Nutzer zur Nutzung des Infrastrukturelements 200 berechtigt ist und dass elektrische Energie bereitgestellt werden kann. In einem weiteren Ausführungsbeispiel wird das Freigabesignal nicht direkt an das Infrastrukturelement 200 gesendet, sondern an eine App des Nutzers, der die Freigabe über das Gerät des Nutzers und an das Infrastrukturelement 200 übertragen kann.

Empfängt das Infrastrukturelement 200 das Freigabesignal aus Schritt 405, so schaltet das Schaltelement 203 in Schritt 406 die elektrische Verbindung zwischen dem ersten elektrischen Anschluss 201 und dem zweiten elektrischen Anschluss 202 so, dass diese Anschlüsse 201, 202 elektrisch miteinander verbunden sind und elektrische Energie an dem zweiten elektrischen Anschluss 202 bereitgestellt wird. Mit der bereitgestellten elektrischen Energie kann der Nutzer das elektrische betriebene Fahrzeug laden.

In einem weiteren Ausführungsbeispiel stellt der Server 300 dem Infrastrukturelement 200 dann ein Stoppsignal bereit, wenn ein vorbestimmter Rechnungsbetrag oder eine vorbestimmte Energiemenge erreicht ist.

Wird der Stecker von dem zweiten elektrischen Anschluss 202 getrennt, so wird automatisch das Schaltelement 203 so geschaltet, dass die elektrische Verbindung zwischen dem ersten elektrischen Anschluss 201 und dem zweiten elektrischen Anschluss 202 unterbrochen wird.

### Bezugszeichenliste

- 100: Straße
- 101: Fahrbahn
- 102: Bordstein
- 103: Fußweg
- 200, 200a: Infrastrukturelement
- 201: erster elektrischer Anschluss
- 202: zweiter elektrischer Anschluss
- 203: Schaltelement
- 204: Kommunikationsschnittstelle
- 205: Mobilfunkschnittstelle
- 300: Server
- 301: Basisstation
- 400: Flussdiagramm
- 401-406: Verfahrensschritt

## Patentansprüche

1. Infrastrukturelement (200, 200a) für einen Belag eines Verkehrswegs zum Bereitstellen elektrischer Energie für ein elektrisch betriebenes Fahrzeug, wobei das Infrastrukturelement (200, 200a) eingerichtet ist zur Kommunikation mit einem Mobilfunknetzwerk und einem Server (300), wobei der Server (300) in dem Mobilfunknetzwerk angeordnet ist und dazu eingerichtet ist, eine zweite Teilnehmeridentifikation eines Nutzers zu prüfen und bei einem positiven Prüfungsergebnis ein Freigabesignal an das Infrastrukturelement (200, 200a) zu senden, mit:
einem Teilnehmeridentitätsmodul mit einer ersten Teilnehmeridentifikation zur Identifikation des Infrastrukturelements (200, 200a) in dem Mobilfunknetzwerk;
einer Kommunikationsschnittstelle (204), die ausgebildet ist, die zweite Teilnehmeridentifikation eines Nutzers zu empfangen, wobei der Nutzer durch die zweite Teilnehmeridentifikation in dem Mobilfunknetzwerk identifizierbar ist;
einer Mobilfunkschnittstelle (205), die ausgebildet ist, die empfangene zweite Teilnehmeridentifikation des Nutzers an den Server (300) über das Mobilfunknetzwerk zu übertragen, und von dem Server (300) das Freigabesignal zu empfangen;
einem ersten elektrischen Anschluss (201), welcher elektrisch mit einem Energieversorgungsnetzwerk verbindbar ist, um das Infrastrukturelement (200, 200a) mit elektrischer Energie zu versorgen;
einem zweiten elektrischen Anschluss (202), der dazu ausgebildet ist, elektrische Energie für das elektrisch betriebene Fahrzeug bereitzustellen; und
einem Schaltelement (203), das ausgebildet ist, ansprechend auf den Empfang des Freigabesignals den ersten elektrischen Anschluss (201) mit dem zweiten elektrischen Anschluss (202) elektrisch zu verbinden,
wobei die Kommunikationsschnittstelle (204) ausgebildet ist, die zweite Teilnehmeridentifikation des Nutzers von einem Mobiltelefon mittels einer Nahfeldkommunikation abzufragen, wenn erkannt wird, dass ein Stecker in den zweiten elektrischen Anschluss (202) eingesteckt ist,
wobei das Schaltelement ausgebildet ist, den ersten elektrischen Anschluss (201) von dem zweiten elektrischen Anschluss (202) elektrisch zu trennen, wenn von dem Server (300) ein Stoppsignal über die Mobilfunkschnittstelle (205) empfangen wurde.

2. Infrastrukturelement (200, 200a) nach Anspruch 1, wobei das Infrastrukturelement (200, 200a) ein Bordstein oder ein Pflasterstein ist.

3. Infrastrukturelement (200, 200a) nach einem der Ansprüche 1 oder 2, wobei die Kommunikationsschnittstelle (204) eine der folgenden Schnittstellen umfasst: NFC, Bluetooth, WLAN, 5G, LTE.

4. Infrastrukturelement (200, 200a) nach einem der vorhergehenden Ansprüche, wobei die Mobilfunkschnittstelle (205) eine 5G Schnittstelle oder eine LTE Schnittstelle umfasst.

5. Infrastrukturelement (200, 200a) nach einem der vorhergehenden Ansprüche, wobei die Mobilfunkschnittstelle (205) ausgebildet ist, die ersten Teilnehmeridentifikation an den Server (300) zu senden, um das Infrastrukturelement (200, 200a) gegenüber dem Server (300) zu identifizieren.

6. Infrastrukturelement (200, 200a) nach einem der vorhergehenden Ansprüche, wobei das Teilnehmeridentitätsmodul eine SIM oder eine eSIM umfasst.

7. Infrastrukturelement (200, 200a) nach einem der vorhergehenden Ansprüche, wobei die zweite Teilnehmeridentifikation des Nutzers eine IMSI oder eID oder eSIM umfasst.

8. Infrastrukturelement (200, 200a) nach einem der vorhergehenden Ansprüche, wobei der zweite elektrische Anschluss (202) ausgebildet ist, einen Stecker gemäß EN 62196 Typ 2 aufzunehmen.

9. Infrastrukturelement (200, 200a) nach einem der vorhergehenden Ansprüche, wobei das Infrastrukturelement (200, 200a) eine Anzeigeeinrichtung aufweist, die dazu eingerichtet ist, ein Statussignal auszugeben, um einen Status des Infrastrukturelements (200, 200a) anzuzeigen.

10. Infrastrukturelement (200, 200a) nach Anspruch 9, wobei die Anzeigeeinrichtung ausgestaltet ist, das Statussignal auszugeben, wenn das Schaltelement (203) den ersten elektrischen Anschluss (201) und den zweiten elektrischen Anschluss (202) elektrisch verbindet.

11. Infrastrukturelement (200, 200a) nach Anspruch 9, wobei die Anzeigeeinrichtung ausgestaltet ist, das Statussignal auszugeben, wenn das Schaltelement (203) den ersten elektrischen Anschluss (201) von dem zweiten elektrischen Anschluss (202) elektrisch trennt.

12. Kommunikationssystem mit einem Infrastrukturelement (200, 200a) nach Anspruch 1 und einem in einem Mobilfunknetz angeordneten Server (300).

13. Verfahren zur Kommunikation zwischen einem Infrastrukturelement (200, 200a) für einen Belag eines Verkehrswegs zum Bereitstellen elektrischer Energie für ein elektrisch betriebenes Fahrzeug und einem in einem Mobilfunknetz angeordneten Server (300), wobei das Infrastrukturelement (200, 200a) ein Teilnehmeridentitätsmodul mit einer ersten Teilnehmeridentifikation zur Identifikation des Infrastrukturelements (200, 200a) in dem Mobilfunknetzwerk, eine Kommunikationsschnittstelle (204) und eine Mobilfunkschnittstelle (205), die ausgebildet ist, mit dem Server (300) über das Mobilfunknetzwerk zu kommunizieren aufweist, wobei das Infrastrukturelement (200, 200a) weiter einen ersten elektrischen Anschluss (201) aufweist, welcher elektrisch mit einem Energieversorgungsnetzwerk verbindbar ist, um das Infrastrukturelement (200, 200a) mit elektrischer Energie zu versorgen und einen zweiten elektrischen Anschluss (202) aufweist, der dazu ausgebildet ist, das Infrastrukturelement (200, 200a) elektrisch mit dem elektrisch betriebenen Fahrzeug zu verbinden und ein Schaltelement (203) aufweist, das ausgebildet ist, den ersten elektrischen Anschluss (201) mit dem zweiten elektrischen Anschluss (202) elektrisch zu verbinden, mit:
Empfangen einer zweiten Teilnehmeridentifikation eines Nutzers durch die Kommunikationsschnittstelle (204) des Infrastrukturelements (200, 200a), wobei der Nutzer durch die zweite Teilnehmeridentifikation in dem Mobilfunknetzwerk identifizierbar ist;
Übertragen der empfangenen zweiten Teilnehmeridentifikation des Nutzers an den Server (300) durch die Mobilfunkschnittstelle (205) des Infrastrukturelements (200, 200a);
Prüfen der zweiten Teilnehmeridentifikation des Nutzers durch den Server (300);
Übertragen eines Freigabesignals an das Infrastrukturelement (200, 200a) durch den Server (300), wenn die Prüfung der zweiten Teilnehmeridentifikation des Nutzers positiv war;
elektrisches Verbinden des ersten elektrischen Anschlusses (201) mit dem zweiten elektrischen Anschluss (202) durch das Schaltelement (203), wenn das Freigabesignal des Servers (300) über die Mobilfunkschnittstelle (205) empfangen wurde; und
elektrisches Trennen des ersten elektrischen Anschlusses (201) von dem zweiten elektrischen Anschluss (202) durch das Schaltelement, wenn von dem Server (300) ein Stoppsignal über die Mobilfunkschnittstelle (205) empfangen wurde;
wobei das Empfangen der zweiten Teilnehmeridentifikation basierend auf einem Abfragen der zweiten Teilnehmeridentifikation des Nutzers von einem Mobiltelefon mittels einer Nahfeldkommunikation, wenn erkannt wird, dass ein Stecker in den zweiten elektrischen Anschluss (202) eingesteckt ist, erfolgt.

## Claims

1. Infrastructure element (200, 200a) for a surface of a traffic route for providing electric power for an electrically operated vehicle, wherein the infrastructure element (200, 200a) is set up for communication with a mobile radio network and a server (300), wherein the server (300) is arranged in the mobile radio network and is set up to check a second subscriber identification of a user and to send an enable signal to the infrastructure element (200, 200a) in the event of a positive check result, having:
a subscriber identity module having a first subscriber identification for identifying the infrastructure element (200, 200a) in the mobile radio network;
a communication interface (204), which is designed to receive the second subscriber identification of a user, wherein the user is identifiable in the mobile radio network by the second subscriber identification;
a mobile radio interface (205), which is designed to transmit the received second subscriber identification of the user to the server (300) via the mobile radio network and to receive the enable signal from the server (300) ;
a first electrical connection (201), which is electrically connectable to a power supply network in order to supply the infrastructure element (200, 200a) with electric power;
a second electrical connection (202), which is designed to provide electric power for the electrically operated vehicle; and
a switching element (203), which is designed to respond to the reception of the enable signal by electrically connecting the first electrical connection (201) to the second electrical connection (202),
wherein the communication interface (204) is designed to request the second subscriber identification of the user from a mobile phone by means of a near field communication when it is detected that a connector has been plugged into the second electrical connection (202),
wherein the switching element is designed to electrically disconnect the first electrical connection (201) from the second electrical connection (202) when a stop signal has been received from the server (300) via the mobile radio interface (205).

2. Infrastructure element (200, 200a) according to Claim 1, wherein the infrastructure element (200, 200a) is a kerb or a paving block.

3. Infrastructure element (200, 200a) according to either of Claims 1 and 2, wherein the communication interface (204) comprises one of the following interfaces: NFC, Bluetooth, WLAN, 5G, LTE.

4. Infrastructure element (200, 200a) according to one of the preceding claims, wherein the mobile radio interface (205) comprises a 5G interface or an LTE interface.

5. Infrastructure element (200, 200a) according to one of the preceding claims, wherein the mobile radio interface (205) is designed to send the first subscriber identification to the server (300) in order to identify the infrastructure element (200, 200a) to the server (300) .

6. Infrastructure element (200, 200a) according to one of the preceding claims, wherein the subscriber identity module comprises a SIM or an eSIM.

7. Infrastructure element (200, 200a) according to one of the preceding claims, wherein the second subscriber identification of the user comprises an IMSI or eID or eSIM.

8. Infrastructure element (200, 200a) according to one of the preceding claims, wherein the second electrical connection (202) is designed to receive an EN 62196 Type 2 connector.

9. Infrastructure element (200, 200a) according to one of the preceding claims, wherein the infrastructure element (200, 200a) has a display device that is set up to output a status signal in order to display a status of the infrastructure element (200, 200a).

10. Infrastructure element (200, 200a) according to Claim 9, wherein the display device is configured to output the status signal when the switching element (203) electrically connects the first electrical connection (201) and the second electrical connection (202).

11. Infrastructure element (200, 200a) according to Claim 9, wherein the display device is configured to output the status signal when the switching element (203) electrically disconnects the first electrical connection (201) from the second electrical connection (202).

12. Communication system having an infrastructure element (200, 200a) according to Claim 1 and a server (300) arranged in a mobile radio network.

13. Method for communication between an infrastructure element (200, 200a) for a surface of a traffic route for providing electric power for an electrically operated vehicle and a server (300) arranged in a mobile radio network, wherein the infrastructure element (200, 200a) has a subscriber identity module having a first subscriber identification for identifying the infrastructure element (200, 200a) in the mobile radio network, a communication interface (204) and a mobile radio interface (205), which is designed to communicate with the server (300) via the mobile radio network, wherein the infrastructure element (200, 200a) furthermore has a first electrical connection (201), which is electrically connectable to a power supply network in order to supply the infrastructure element (200, 200a) with electric power, and has a second electrical connection (202), which is designed to electrically connect the infrastructure element (200, 200a) to the electrically operated vehicle, and has a switching element (203), which is designed to electrically connect the first electrical connection (201) to the second electrical connection (202), involving:
receiving a second subscriber identification of a user by means of the communication interface (204) of the infrastructure element (200, 200a), wherein the user is identifiable in the mobile radio network by the second subscriber identification;
transmitting the received second subscriber identification of the user to the server (300) by means of the mobile radio interface (205) of the infrastructure element (200, 200a);
checking the second subscriber identification of the user by means of the server (300);
transmitting an enable signal to the infrastructure element (200, 200a) by means of the server (300) if the check on the second subscriber identification of the user was positive;
electrically connecting the first electrical connection (201) to the second electrical connection (202) by means of the switching element (203) when the enable signal of the server (300) has been received via the mobile radio interface (205); and
electrically disconnecting the first electrical connection (201) from the second electrical connection (202) by means of the switching element when a stop signal has been received from the server (300) via the mobile radio interface (205);
wherein the second subscriber identification is received on the basis of a requesting of the second subscriber identification of the user from a mobile phone by means of a near field communication when it is detected that a connector has been plugged into the second electrical connection (202).

## Revendications

1. Élément d'infrastructure (200, 200a) destiné à un revêtement d'une voie de circulation pour fournir de l'énergie électrique à un véhicule électrique, l'élément d'infrastructure (200, 200a) étant conçu pour communiquer avec un réseau de téléphonie mobile et un serveur (300), le serveur (300) étant disposé dans le réseau de téléphonie mobile et étant conçu pour vérifier une deuxième identification d'abonné d'un utilisateur et pour envoyer, si le résultat de la vérification est positif, un signal d'activation à l'élément d'infrastructure (200, 200a), l'élément d'infrastructure comprenant
un module d'identité d'abonné pourvu d'une première identification d'abonné destinée à identifier l'élément d'infrastructure (200, 200a) dans le réseau de téléphonie mobile ;
une interface de communication (204) qui est conçue pour recevoir la deuxième identification d'abonné d'un utilisateur, l'utilisateur pouvant être identifié par la deuxième identification d'abonné dans le réseau de téléphonie mobile ;
une interface de téléphonie mobile (205) qui est conçue pour transmettre la deuxième identification d'abonné reçue de l'utilisateur au serveur (300) par le biais du réseau de téléphonie mobile et pour recevoir le signal d'activation du serveur (300) ;
une première borne électrique (201) qui peut être reliée électriquement à un réseau d'alimentation en énergie afin d'alimenter l'élément d'infrastructure (200, 200a) en énergie électrique ;
une deuxième borne électrique (202) qui est conçue pour fournir de l'énergie électrique au véhicule électrique ; et
un élément de commutation (203) qui est conçu pour relier électriquement la première borne électrique (201) à la deuxième borne électrique (202) en réponse à la réception du signal d'activation,
l'interface de communication (204) étant conçue pour interroger la deuxième identification d'abonné de l'utilisateur à partir d'un téléphone mobile au moyen d'une communication en champ proche lorsqu'il est détecté qu'un connecteur est inséré dans la deuxième borne électrique (202),
l'élément de commutation étant conçu pour séparer électriquement la première borne électrique {201) de la deuxième borne électrique (202) lorsqu'un signal d'arrêt a été reçu du serveur (300) par le biais de l'interface de téléphonie mobile (205).

2. Élément d'infrastructure (200, 200a) selon la revendication 1, l'élément d'infrastructure (200, 200a) étant une bordure ou un pavé.

3. Élément d'infrastructure (200, 200a) selon l'une des revendications 1 ou 2, l'interface de communication (204) comprenant l'une des interfaces suivantes : NFC, Bluetooth, WLAN, 5G, LTE.

4. Élément d'infrastructure (200, 200a) selon l'une des revendications précédentes, l'interface de téléphonie mobile (205) comprenant une interface 5G ou une interface LTE.

5. Élément d'infrastructure (200, 200a) selon l'une des revendications précédentes, l'interface de téléphonie mobile (205) étant conçue pour envoyer la première identification d'abonné au serveur (300) afin d'identifier l'élément d'infrastructure (200, 200a) par rapport au serveur (300).

6. Élément d'infrastructure (200, 200a) selon l'une des revendications précédentes, le module d'identité d'abonné comprenant une SIM ou une eSIM.

7. Élément d'infrastructure (200, 200a) selon l'une des revendications précédentes, la deuxième identification d'abonné de l'utilisateur comprenant une IMSI ou eID ou eSIM.

8. Élément d'infrastructure (200, 200a) selon l'une des revendications précédentes, la deuxième borne électrique (202) étant conçue pour recevoir un connecteur selon EN 62196 type 2.

9. Élément d'infrastructure (200, 200a) selon l'une des revendications précédentes, l'élément d'infrastructure (200, 200a) comportant un dispositif d'affichage qui est conçu pour délivrer un signal d'état afin d'afficher un état de l'élément d'infrastructure (200, 200a).

10. Élément d'infrastructure (200, 200a) selon la revendication 9, le dispositif d'affichage étant conçu pour délivrer le signal d'état lorsque l'élément de commutation (203) relie électriquement la première borne électrique (201) et la deuxième borne électrique (202).

11. Élément d'infrastructure (200, 200a) selon la revendication 9, le dispositif d'affichage étant conçu pour délivrer le signal d'état lorsque l'élément de commutation (203) sépare électriquement la première borne électrique (201) de la deuxième borne électrique (202).

12. Système de communication comprenant : un élément d'infrastructure (200, 200a) selon la revendication 1 et un serveur (300) disposé dans un réseau de téléphonie mobile.

13. Procédé de communication entre un élément d'infrastructure (200, 200a), destiné à un revêtement d'une voie de circulation pour fournir de l'énergie électrique à un véhicule électrique, et un serveur (300) disposé dans un réseau de téléphonie mobile,
l'élément d'infrastructure (200, 200a) comportant un module d'identité d'abonné pourvu d'une première identification d'abonné pour identifier l'élément d'infrastructure (200, 200a) dans le réseau de téléphonie mobile, une interface de communication (204) et une interface de téléphonie mobile (205) qui est conçue pour communiquer avec le serveur (300) par le biais du réseau de téléphonie mobile, l'élément d'infrastructure (200, 200a) comportant en outre une première borne électrique (201), qui peut être reliée électriquement à un réseau d'alimentation en énergie afin d'alimenter l'élément d'infrastructure (200, 200a) en énergie électrique, et une deuxième borne électrique (202) qui est conçue pour relier électriquement l'élément d'infrastructure (200, 200a) au véhicule électrique et un élément de commutation (203) qui est conçu pour relier électriquement la première borne électrique (201) à la deuxième borne électrique (202), le procédé comprenant les étapes suivantes :
recevoir une deuxième identification d'abonné d'un utilisateur par le biais de l'interface de communication (204) de l'élément d'infrastructure (200, 200a), l'utilisateur pouvant être identifié par la deuxième identification d'abonné dans le réseau de téléphonie mobile ;
transmettre la deuxième identification d'abonné reçue de l'utilisateur au serveur (300) par le biais de l'interface de téléphonie mobile (205) de l'élément d'infrastructure (200, 200a) ;
vérifier la deuxième identification d'abonné de l'utilisateur à l'aide du serveur (300) ;
transmettre un signal d'activation à l'élément d'infrastructure (200, 200a) à l'aide du serveur (300) si la vérification de la deuxième identification d'abonné de l'utilisateur était positive ;
relier électriquement la première borne électrique (201) à la deuxième borne électrique (202) à l'aide de l'élément de commutation (203) lorsque le signal d'activation du serveur (300) a été reçu par le biais de l'interface de téléphonie mobile (205) ; et
séparer électriquement la première borne électrique (201) de la deuxième borne électrique (202) à l'aide de l'élément de commutation lorsqu'un signal d'arrêt a été reçu du serveur (300) par le biais de l'interface de téléphonie mobile (205) ;
la réception de la deuxième identification d'abonné étant effectuée sur la base d'une interrogation de la deuxième identification d'abonné de l'utilisateur à partir d'un téléphone mobile au moyen d'une communication en champ proche lorsqu'il est détecté qu'un connecteur est inséré dans la deuxième borne électrique (202).
